# EUROPEAN PATENT SPECIFICATION

(11) **EP 2 390 526 B1**
(45) Date of publication and mention of the grant of the patent: **28.08.2013**
(21) Application number: 11164929.9
(22) Date of filing: 05.05.2011
(51) Int. Cl.: F16D 65/14, B60T 17/08

(54) **Brake system**
Bremssystem
Système de freinage

(30) Priority: 17.05.2010 US 781541
(43) Date of publication of application: 30.11.2011
(73) Proprietor: Kobelt Manufacturing Co. Ltd., Surrey British Columbia V3W 0A6 (CA)
(72) Inventor: Kobelt, Jacob, Surrey British Columbia V4A 3L9 (CA)
(74) Representative: Zacco Denmark A/S

(56) References cited:
- DE-A1-102008 043 494
- US-A- 3 999 634
- US-A1- 2007 246 313
- US-B1- 6 585 088

## Description

### BACKGROUND OF THE INVENTION

### 1. Field of Invention

The invention relates generally to braking, and more particularly to a method of operating a brake actuator, and a system including a brake actuator.

### 2. Description of Related Art

A conventional fail-safe brake system includes a brake actuator having a piston coupleable to a brake to actuate the brake. Such a conventional brake actuator includes one or more springs that urge the piston in a brake-actuating direction. Pressurized air, for example, controllably moves the piston in a brake-releasing direction opposite the brake-actuating direction and against the resilient force of the one or more springs to release the brake or to vary a degree of actuation of the brake. Such brake systems may be referred to as fail-safe brake systems because if a source of the pressurized air fails, the one or more springs urge the piston in the brake-actuating direction to actuate the brake.

However, the one or more springs in such a conventional fail-safe brake actuator wear over time, and exert less force as they extend from morecompressed positions to less-compressed positions. As the one or more springs wear over time, the fail-safe function of these brake systems diminishes, and therefore, disadvantageously, the one or more springs must be periodically replaced. Also, the one or more springs in these brake systems generally extend over significant lengths, thereby increasing the overall length, size, and weight of the brake actuator.

US 3,999,634 discloses a pneumatic piston for a disc brake, whereby actuation and retraction of the piston is provided by one or more sources of air under pressure. A separate air supply is provided for actuation and retraction. When vehicle operation is desired, air under pressure (great enough to compress springs) is supplied to a first chamber while no air under pressure is supplied to a second chamber (rather the second chamber may be vented). This retracts the piston, releasing the pressure on the stator, and allowing rotation of the axle. If braking of the vehicle is desired, air under pressure from source is supplied to the second chamber while no air is provided to the first chamber (rather the first chamber is vented).

US 6,776,268 B2 discloses a brake equipment that can have a relatively small, integrated air supply volume and can be controlled electronically. The equipment can include a brake cylinder housing a piston, a pair of air chambers acting on opposite sides of the piston, and an air reservoir. Coupling of the air chambers and the air reservoir to each other, a source of pressure, or the atmosphere can be controlled by appropriate valves to regulate the pressure in the brake cylinder.

US 5,501,512 discloses a brake control system comprising a brake cylinder device connected to a supply air reservoir via a branch pipe.

### SUMMARY OF THE INVENTION

In accordance with the invention, there is provided a method of operating a brake actuator having a piston coupleable to a brake to actuate the brake. The method involves maintaining a first fluid pressure of a first fluid against a first side of the piston to urge the piston in a brake-actuating direction, and controlling a second fluid pressure of a second fluid against a second side of the piston opposite the first side of the piston to move the piston controllably in a brake-releasing direction opposite the brake-actuating direction.

Maintaining the first fluid pressure of the first fluid against the first side of the piston may involve supplying the first fluid through a check valve to a pressurized fluid reservoir in fluid communication with the first side of the piston, and preventing the first fluid from escaping the pressurized fluid reservoir through the check valve.

Supplying the first fluid through the check valve to the pressurized fluid reservoir may involve supplying the first fluid through the check valve to the pressurized fluid reservoir through a pressure regulator until the first fluid in the pressurized fluid reservoir reaches the first fluid pressure.

The first fluid may include gas.

Controlling the second fluid pressure of the second fluid against the second side of the piston may involve supplying the second fluid at a third fluid pressure greater than the first fluid pressure to a control valve in fluid communication with the second side of the piston.

The second fluid may include gas.

The second fluid may include hydraulic fluid.

In accordance with the invention, there is provided a brake system.

The brake system includes a brake actuator. The brake actuator includes a piston having first and second opposite sides. The brake actuator also includes an actuator body having an inner surface defining a cavity holding the piston in sealed and slidable engagement with the inner surface such that the piston defines first and second chambers in the cavity on the first and second sides of the piston respectively, the actuator body having a first opening in fluid communication with the first chamber for receiving a first pressurized fluid, a second opening in fluid communication with the second chamber for receiving a second pressurized fluid, and a third opening in communication with the second chamber. The brake actuator also includes an actuator rod coupled to the piston on the second side of the piston, extending in sealed and slidable engagement with the actuator body through the third opening, and coupleable to a brake to actuate the brake. The brake system also includes means, in fluid communication with the first opening of the actuator body, for maintaining a first fluid pressure of the first fluid against the first side of the piston to urge the piston and the actuator rod in a brake-actuating direction. The brake system also includes means, in fluid communication with the second opening of the actuator body, for controlling a second fluid pressure of the second fluid against the second side of the piston to move the piston and the actuator rod controllably in a brake-releasing direction opposite the brake-actuating direction.

The means for maintaining the first fluid pressure of the first fluid against the first side of the piston may include a pressurized fluid reservoir in fluid communication with the first opening of the actuator body, and a check valve in fluid communication with the pressurized fluid reservoir, the check valve configured to permit the first fluid to be supplied therethrough to the pressurized fluid reservoir and configured to prevent the first fluid from escaping the pressurized fluid reservoir therethrough.

The means for maintaining the first fluid pressure of the first fluid against the first side of the piston further may include a pressure regulator in fluid communication with the check valve and configured to permit the first fluid to be supplied to the pressurized fluid reservoir through the check valve until the first fluid in the fluid reservoir reaches the first fluid pressure.

The system may further include means for supplying the first fluid to the pressure regulator.

The first fluid may include gas.

The means for controlling the second fluid pressure of the second fluid against the second side of the piston may include a control valve in fluid communication with the second opening of the actuator body, and means for supplying the second fluid to the control valve at a third fluid pressure greater than the first fluid pressure.

The second fluid may include gas.

The second fluid may include hydraulic fluid.

The first pressurized fluid source includes a pressurized fluid reservoir in fluid communication with the first opening of the actuator body, and a check valve in fluid communication with the pressurized fluid reservoir, the check valve configured to permit the first fluid to be supplied therethrough to the pressurized fluid reservoir and configured to prevent the first fluid from escaping the pressurized fluid reservoir therethrough.

The first pressurized fluid source further includes a pressure regulator in fluid communication with the check valve and configured to permit the first fluid to be supplied to the pressurized fluid reservoir through the check valve until the first fluid in the fluid reservoir reaches the first fluid pressure.

The system may further include a first fluid pump for supplying the first fluid to the pressure regulator.

The first fluid may include gas.

The second fluid source may include a control valve in fluid communication with the second opening of the actuator body, and a second fluid pump for supplying the second fluid to the control valve at a third fluid pressure greater than the first fluid pressure.

The second fluid may include gas.

The second fluid may include hydraulic fluid.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

In drawings that illustrate embodiments of the invention:
- Figure **1**: is a schematic view of a brake system in accordance with a first embodiment of the invention;
- Figure **2**: is a cross-sectional view of a brake actuator of the brake system of Figure **1**; and
- Figure **3**: is a schematic view of a brake system in accordance with another embodiment of the invention.

### DETAILED DESCRIPTION

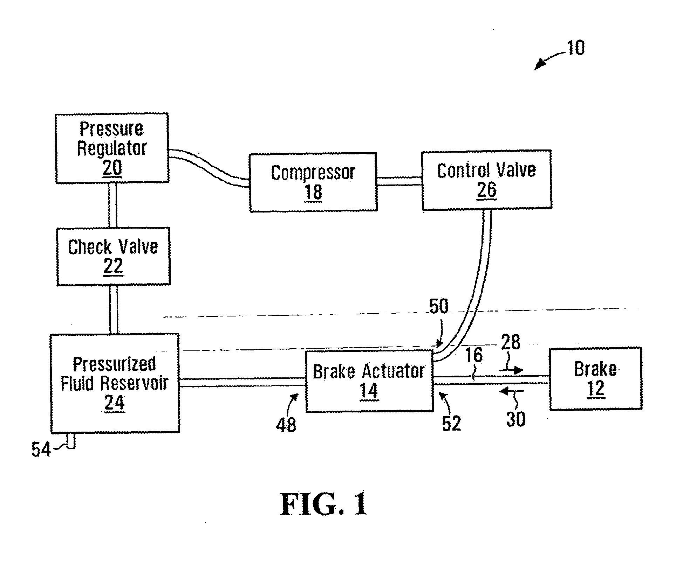

Referring to Figure **1**, a brake system in accordance with a first embodiment of the invention is shown generally at **10**. The brake system **10** includes a brake **12** and a brake actuator **14** having an actuator rod **16** coupled to the brake **12** to actuate the brake **12**. The brake system **10** also includes a compressor **18**, a pressure regulator **20**, a check valve **22**, a pressurized fluid reservoir **24**, and a control valve **26**.

In the embodiment shown, the brake **12** is a conventional disc brake. The brake **12** is actuated when the actuator rod **16** is moved in a brake-actuating direction indicated by the arrow **28**, and is released when the actuator rod **16** is moved in a brake-releasing direction indicated by the arrow **30** and opposite the brake-actuating direction.

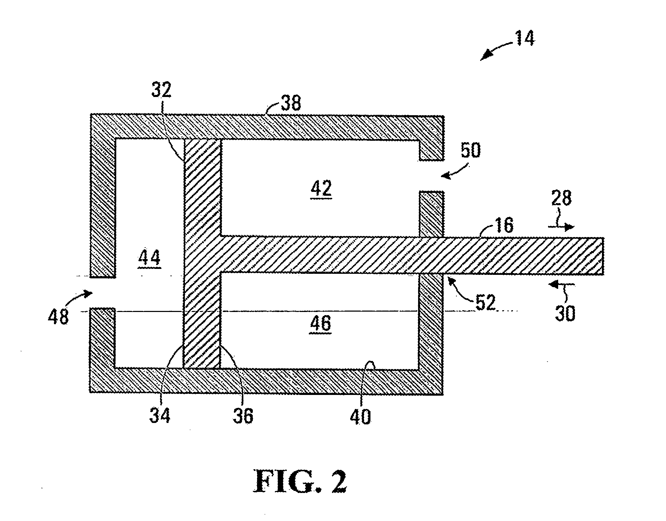

Referring to Figure **2**, the brake actuator **14** includes a piston **32** having a first side **34** and a second side **36** opposite the first side **34**, The brake actuator **14** also includes an actuator body **38** having an inner surface **40** defining a cavity **42**. The cavity **42** holds the piston **32** in sealed and slidable engagement with the inner surface **40** such that the piston defines first and second chambers **44** and **46** in the cavity **42** on the first and second sides **34** and **36** of the piston **32** respectively.

The actuator body **38** has a first opening shown generally at **48** in fluid communication with the first chamber **44**, a second opening shown generally at **50** in fluid communication with the second chamber **46**, and a third opening shown generally at **52** in communication with the second chamber **46**. The actuator rod **16** is coupled to the piston **32** on the second side **36** of the piston **32**, and extends in sealed and slidable engagement with the actuator body **38** through the third opening **52**.

Referring back to Figure **1**, the compressor **18** in the embodiment shown supplies pressurized gas (such as ambient atmospheric air, for example) to the pressure regulator **20**. Alternatively, the compressor **18** may be replaced with a fluid pump to supply any pressurized fluid to the pressure regulator **20**, and the compressor **18** may more generally be referred to as a "fluid pump".

The pressure regulator **20** in the embodiment shown receives pressurized gas from the compressor **18**, and is configured to supply the pressurized gas from the compressor **18** through the check valve **22** to the pressurized fluid reservoir **24** until the gas in the pressurized fluid reservoir **24** reaches a first fluid pressure.

The check valve **22** in the embodiment shown permits pressurized gas received from the pressure regulator **20** to be supplied therethrough to the pressurized fluid reservoir **24**, and prevents pressurized gas from escaping from the pressurized fluid reservoir **24** therethrough.

Therefore, the compressor **18**, the pressure regulator **20**, and the check valve **22** maintain pressurized gas in the pressurized fluid reservoir **24** at the first fluid pressure. However, in alternative embodiments, these components may be configured to maintain any fluid in the pressurized fluid reservoir **24** at such a first fluid pressure.

In the embodiment shown, the pressurized fluid reservoir **24** has a drain cock **54** openable to release pressurized gas from the pressurized fluid reservoir **24**, although the drain cock **54** is closed during normal operation. Referring to Figures **1** and **2**, the pressurized fluid reservoir **24** is in fluid communication with the first chamber **44** of the brake actuator **14** through the first opening **48** of the actuator body **38**. Therefore, the first chamber **44** of the brake actuator **14** receives a first fluid (which, in the embodiment shown, is gas) from the pressurized fluid reservoir **24** at the first fluid pressure, and the compressor **18**, the pressure regulator **20**, the check valve **22**, and the pressurized fluid reservoir **24** function as a first pressurized fluid source in fluid communication with the first opening **48** of the actuator body **38** to maintain the first fluid pressure of the first fluid against the first side **34** of the piston **32** to urge the piston **32** and the actuator rod **16** in the brake-actuating direction shown by the arrow **28**. In alternative embodiments, the brake actuator **14** may further include one or more springs (not shown) in the first chamber **44**, for example, to supplement the force from the first fluid pressure of the first fluid on the piston **32** in the brake-actuating direction shown by the arrow **28.**

Referring back to Figure **1**, in the embodiment shown, the compressor **18** also supplies pressurized gas (such as ambient atmospheric air, for example) to the control valve **26** at a fluid pressure greater than the first fluid pressure. The control valve **26** is in communication with a brake pedal (not shown) to control a degree of brake actuation of the brake actuator **14** on the brake **12**. The control valve **26** is also in fluid communication with the second side **36** of the piston **32** and the second chamber **46** of the brake actuator **14** through the second opening **50** of the actuator body **38**, and the second chamber **46** therefore receives a second fluid (which, in the embodiment shown, is also gas) from the control valve **26**. The control valve **26** controls a second pressure of the second fluid against the second side **36** of the piston **32** by controllably regulating the pressure of the pressurized gas received from the compressor **18** in response to actuation of the brake pedal (not shown).

In operation, in the embodiment shown, the compressor **18**, the pressure regulator **20**, the check valve **22**, and the pressurized fluid reservoir **24** maintain the generally constant first fluid pressure of the first fluid in the first chamber **44** and against the first side **34** of the piston **32**. In order to actuate the brake **12** or increase a degree of actuation of the brake **12**, the control valve **26** reduces a second fluid pressure of the second fluid in the second chamber **46** and against the second side **36** of the piston **32** such that the first fluid pressure of the first fluid in the first chamber **44** against the first side **34** of the piston **32** exceeds the second fluid pressure, thereby causing the piston **32** and the actuator rod **16** move in the brake-actuating direction shown by the arrow **28** to actuate the brake **12**. Alternatively, in order to release the brake **12** or reduce a degree of actuation of the brake **12**, the control valve **26** increases the second fluid pressure of the second fluid in the second chamber **46** and against the second side **36** of the piston **32** to such that the second fluid pressure exceeds the first fluid pressure of the first fluid in the first chamber **44** and against the first side **34** of the piston **32**, thereby causing the piston **32** and the actuator rod **16** to move in the brake-releasing direction shown by the arrow **30**.

Therefore, actuation of the brake pedal (not shown) regulates the second pressure of the second fluid against the second side **36** of the piston **32** to move the piston **32** controllably in either the brake-actuating direction shown by the arrow **28** or in the brake-releasing direction shown by the arrow **30**, and therefore the compressor **18** and the control valve **26** function as a second pressurized fluid source in fluid communication with the second chamber **46** and the second side **36** of the piston **32** through the second opening **50** of the actuator body **38** to control the second fluid pressure of the second fluid against the second side **36** of the piston **32** and move the piston **32** and the actuator rod **16** controllably in, for example, the brake-releasing direction shown by the arrow **30**.

Advantageously, in the event of failure of one or both of the compressor **18** and the control valve **26**, the pressurized fluid reservoir **24** maintains the first pressure of air in the first chamber **44** of the brake actuator **14** and against the first side **34** of the piston **32**, thereby urging the piston **32** and the actuator rod **16** in the brake-actuating direction shown by the arrow **28**. Because the brake **12** is actuated in response to failure of one or both of the compressor **18** and the control valve **26**, the brake system **10** may be referred to as a fail-safe brake system.

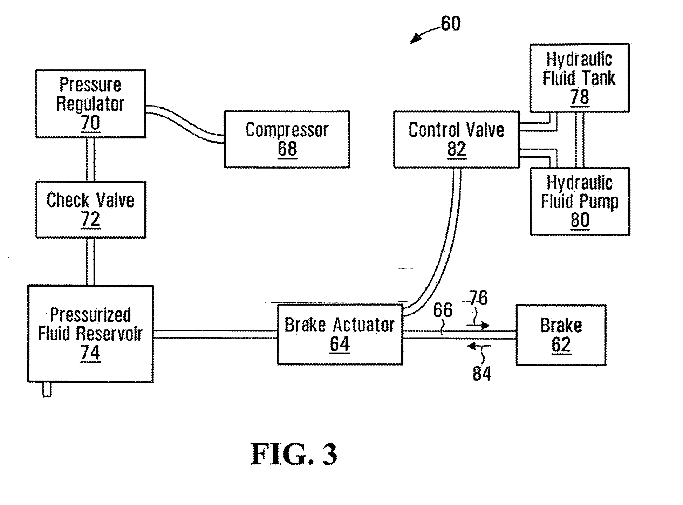

Referring to Figure **3**, a brake system in accordance with another embodiment of the invention is shown generally at **60**. The brake system **60** includes a brake **62** and a brake actuator **64** having an actuator rod **66** coupled to the brake **62** to actuate the brake **62**. The brake **62**, the brake actuator **64**, and the actuator rod **66** in the embodiment shown are substantially the same as the brake **12**, the brake actuator **14**, and the actuator rod **16** respectively discussed above and shown in Figures **1** and **2**.

The brake system **60** also includes a compressor **68**, a pressure regulator **70**, a check valve **72**, and a pressurized fluid reservoir **74**. The compressor **68**, the pressure regulator **70**, the check valve **72**, and the pressurized fluid reservoir **74** in the embodiment shown are substantial the same as the compressor **18**, the pressure regulator **20**, the check valve **22**, and the pressurized fluid reservoir **24** respectively discussed above and shown in Figure **1**. Therefore, the compressor **68**, the pressure regulator **70**, and the check valve **72** maintain a first fluid (which, in the embodiment shown, is gas) in the pressurized fluid reservoir **74** at a first fluid pressure.

The pressurized fluid reservoir **74** is in fluid communication with a first chamber of the brake actuator **64** (corresponding to the first chamber **44** of the brake actuator **14** shown Figure 2) through a first opening of an actuator body of the brake actuator **64** (corresponding to the first opening **48** of the actuator body **38** of the brake actuator **14** shown in Figure **2**), and therefore in the embodiment shown, the first chamber of the brake actuator **64** receives the first fluid from the pressurized fluid reservoir **74** at the first fluid pressure, and the compressor **68**, the pressure regulator **70**, the check valve **72**, and the pressurized fluid reservoir **74** function as a first pressurized fluid source in fluid communication with the first opening of the actuator body of the brake actuator **64** to maintain the first fluid pressure of the first fluid against a first side of the piston of the brake actuator **64** (corresponding to the first side **34** of the piston **32** of the brake actuator **14** shown in Figure **2**) to urge the piston of the brake actuator **64** and the actuator rod 66 in a brake-actuating direction shown by the arrow **76** to actuate the brake **62**.

The brake system **10** also includes a hydraulic fluid tank **78** for storing hydraulic fluid, a hydraulic fluid pump **80** in fluid communication with the hydraulic fluid tank **78**, and a control valve **82**. In the embodiment shown, the hydraulic fluid pump **80** supplies pressurized hydraulic fluid from the hydraulic fluid tank **78** to the control valve **82** at a pressure greater than the first fluid pressure. The control valve **82** is in communication with a brake pedal (not shown) to control a degree of brake actuation of the brake actuator **64** on the brake **62**. The control valve **82** is also in fluid communication with a second side of the piston of the brake actuator **64** (corresponding to the second side **36** of the piston **32** of the brake actuator **14** shown in Figure **2**) through a second opening of the actuator body of the brake actuator **64** (corresponding to the second opening **50** of the actuator body **38** of the brake actuator **14** shown in Figure **2**), and the second chamber of the brake actuator **64** therefore receives a second fluid (which, in the embodiment shown, is hydraulic fluid) from the control valve **82**. The control valve **82** controls a second pressure of the second fluid against the second side of the piston of the brake actuator **64** by controllably regulating the pressure of the pressurized hydraulic fluid received from the hydraulic fluid pump **80** in response to actuation of the brake pedal (not shown).

The hydraulic fluid tank **78**, the hydraulic fluid pump **80**, and the control valve **82** therefore function as a second pressurized fluid source in fluid communication with the second chamber of the brake actuator **64** and the second side of the piston of the brake actuator **64** through the second opening of the actuator body of the brake actuator **64** to control the second fluid pressure of the second fluid against the second side of the piston of the brake actuator **64** and move the piston of the brake actuator **64** and the actuator rod **66** controllably in a brake-releasing direction shown by the arrow **84** opposite the brake-actuating direction shown by the arrow **76**. The control valve **82** is also in fluid communication directly with the hydraulic fluid tank **78**, to facilitate restoring hydraulic fluid to the hydraulic fluid tank **78** when the second chamber of the brake actuator **64** contracts in response to movement of the piston of the brake actuator **64** in the brake-actuating direction shown by the arrow **76**. In Summary, the brake system **60** functions in substantially the same way as the brake system **10**, although in the brake system **60**, the second fluid is hydraulic fluid, whereas in the brake system **10**, the second fluid is gas.

While specific embodiments of the invention have been described and illustrated, such embodiments should be considered illustrative of the invention only and not as limiting the invention as construed in accordance with the accompanying claims.

## Claims

1. A method of operating a brake actuator (14, 64) having a piston (32) coupleable to a brake (12, 62) to actuate the brake (12, 62), the method comprising:
applying a first fluid pressure of a first fluid against a first side (34) of the piston (32) to urge the piston (32) in a brake-actuating direction (28, 76); and
controlling a second fluid pressure of a second fluid against a second side (36) of the piston (32) opposite the first side (34) of the piston (32) to move the piston (32) controllably in a brake-releasing direction (30, 84) opposite the brake-actuating direction (28, 76);
wherein applying the first fluid pressure of the first fluid against the first side (34) of the piston (32) comprises:
supplying the first fluid through a check valve (22, 72) to a pressurized fluid reservoir (24, 74) in fluid communication with a first chamber (44) on the first side (34) of the piston (32); and
preventing the first fluid from escaping the pressurized fluid reservoir (24, 74) through the check valve (22, 72); and
**characterized by**
in operation, maintaining the first fluid pressure of the first fluid against the first side (34) of the piston (32),
and by that supplying the first fluid through the check valve (22, 72) to the pressurized fluid reservoir (24, 74) comprises supplying the first fluid through the check valve (22, 72) to the pressurized fluid reservoir (24, 74) through a pressure regulator (20, 70) until the first fluid in the pressurized fluid reservoir (24, 74) reaches the first fluid pressure.

2. The method of claim 1 wherein the first fluid comprises gas.

3. The method of claim 1 or 2 wherein controlling the second fluid pressure of the second fluid against the second side (36) of the piston (32) comprises supplying the second fluid at a third fluid pressure greater than the first fluid pressure to a control valve (26, 82) in fluid communication with a second chamber (46) on the second side (36) of the piston (32).

4. The method of claim 3 wherein:
supplying the first fluid comprises supplying the first fluid from a fluid pump (18); and
supplying the second fluid at the third fluid pressure to the control valve (26) comprises supplying the second fluid at the third fluid pressure to the control valve (26) from the fluid pump (18).

5. A brake system (10, 60) comprising:
a brake actuator (14, 64) comprising:
a piston (32) having first (34) and second (36) opposite sides;
an actuator body (38) having an inner surface (40) defining a cavity(42) holding the piston (32) in sealed and slidable engagement with the inner surface (40) such that the piston (32) defines first (44) and second (46) chambers in the cavity (42) on the first (34) and second (36) sides of the piston (32) respectively, the actuator body (38) having a first opening (48) in fluid communication with the first chamber (44) for receiving a first pressurized fluid, a second opening (50) in fluid communication with the second chamber (46) for receiving a second pressurized fluid, and a third opening (52) in communication with the second chamber (46); and
an actuator rod (16, 66) coupled to the piston (32) on the second side (36) of the piston (32), extending in sealed and slidable engagement with the actuator body (38) through the third opening (52), and coupleable to a brake (12, 62) to actuate the brake (12, 62); and
a first pressurized fluid source in fluid communication with the first opening (48) of the actuator body (38) to urge the piston (32) and the actuator rod (16, 66) in a brake-actuating direction (28, 76); and
a second pressurized fluid source in fluid communication with the second opening (50) of the actuator body (38) and configured to control a second fluid pressure of the second fluid against the second side (36) of the piston (32) to move the piston (32) and the actuator rod (16, 66) controllably in a brake-releasing direction (30, 84) opposite the brake-actuating direction (28, 76);
wherein the first pressurized fluid source comprises:
a pressurized fluid reservoir (24, 74) in fluid communication with the first opening (48) of the actuator body (38);
a check valve (22, 72) in fluid communication with the pressurized fluid reservoir (24, 74), the check valve (22, 72) configured to permit the first fluid to be supplied therethrough to the pressurized fluid reservoir (24, 74) and configured to prevent the first fluid from escaping the pressurized fluid reservoir (24, 74) therethrough,
**characterized in that**
the first pressurized fluid source is configured to, in operation, maintain a first fluid pressure of the first fluid against the first side (34) of the piston (32),
and **in that** the first pressurized fluid sourcefurther comprises a pressure regulator (20, 70) in fluid communication with the check valve (22, 72) and configured to permit the first fluid to be supplied to the pressurized fluid reservoir (24, 74) through the check valve (22, 72) until the first fluid in the pressurized fluid reservoir (24, 74) reaches the first fluid pressure.

6. The system of claim 5 **characterized in that** the first fluid comprises gas.

7. The system of claim5 or 6 **characterized by** a first fluid pump (18, 68) for supplying the first fluid to the pressure regulator (20, 70).

8. The system of any one of claims 5 to 7 **characterized in that** the second pressurized fluid source comprises:
a control valve (82) in fluid communication with the second opening (50) of the actuator body (38); and
a second fluid pump (80) for supplying the second fluid to the control valve (82) at a third fluid pressure greater than the first fluid pressure.

9. The system of claim 7 **characterized in that** the first fluid pump (18) is in fluid communication with the control valve (26) for supplying the second fluid to the control valve (26) at a third fluid pressure greater than the first fluid pressure.

10. The method of any one of claims 1 to 4 or the system of any one of claims 5 to 9 **characterized in that** the second fluid comprises gas.

11. The method of any one of claims 1 to 3 or the system of any one of claims 5 to 8 **characterized in that** the second fluid comprises hydraulic fluid.

## Patentansprüche

1. Verfahren zur Bedienung eines Bremszylinders (14, 64), welcher zur Betätigung der Bremse (12, 62) einen an eine Bremse (12, 62) ankoppelbaren Kolben (32) aufweist, welches Verfahren umfasst:
Beaufschlagung einer ersten Seite (34) des Kolbens (32) mit einem ersten Flüssigkeitsdruck einer ersten Flüssigkeit, um den Kolben (32) in eine Bremsbetätigungsrichtung (28, 76) zu bewegen; und
Steuerung eines zweiten Flüssigkeitsdrucks einer zweiten Flüssigkeit gegen eine der ersten Seite (34) des Kolbens (32) gegenüberliegende zweite Seite (36) des Kolbens (32), um den Kolben (32) in eine der Bremsbetätigungsrichtung (28, 76) entgegengesetzte Bremsfreigaberichtung (30, 84) gesteuert zu bewegen;
wobei die Beaufschlagung der ersten Seite (34) des Kolbens (32) mit dem ersten Flüssigkeitsdruck der ersten Flüssigkeit umfasst:
Zuführen der ersten Flüssigkeit durch ein Rückschlagventil (22, 72) zu einem unter Druck stehenden Flüssigkeitsspeicher (24, 74), welcher mit einer ersten Kammer (44) an der ersten Seite (34) des Kolbens (32) in Fluidverbindung steht; und
Hindern der ersten Flüssigkeit an einem Austreten aus dem unter Druck stehenden Flüssigkeitsspeicher (24, 74) durch das Rückschlagventil (22, 72);
und
**gekennzeichnet durch**
Aufrechterhaltung des ersten Flüssigkeitsdrucks der ersten Flüssigkeit gegen die erste Seite (34) des Kolbens (32) während des Betriebs,
und **dadurch**, dass das Zuführen der ersten Flüssigkeit **durch** das Rückschlagventil (22, 72) zum unter Druck stehenden Flüssigkeitsspeicher (24, 74) das Zuführen der ersten Flüssigkeit **durch** das Rückschlagventil (22, 72) zum unter Druck stehenden Flüssigkeitsspeicher (24, 74) über einen Druckregler (20, 70) umfasst, bis die erste Flüssigkeit in dem unter Druck stehenden Flüssigkeitsspeicher (24, 74) den ersten Flüssigkeitsdruck erreicht.

2. Verfahren nach Anspruch 1, wobei die erste Flüssigkeit Gas enthält.

3. Verfahren nach Anspruch 1 oder 2, wobei die Steuerung des zweiten Flüssigkeitsdrucks der zweiten Flüssigkeit gegen die zweite Seite (36) des Kolbens (32) das Zuführen der zweiten Flüssigkeit zu einem mit einer zweiten Kammer (46) an der zweiten Seite (36) des Kolbens (32) in Fluidverbindung stehenden Regelventil (26, 82) bei einem dritten Flüssigkeitsdruck umfasst, welcher höher als der erste Flüssigkeitsdruck ist.

4. Verfahren nach Anspruch 3, wobei:
das Zuführen der ersten Flüssigkeit das Zuführen der ersten Flüssigkeit aus einer Flüssigkeitspumpe (18) umfasst; und
das Zuführen der zweiten Flüssigkeit zum Regelventil (26) bei dem dritten Flüssigkeitsdruck das Zuführen der zweiten Flüssigkeit zum Regelventil (26) aus der Flüssigkeitspumpe (18) bei dem dritten Flüssigkeitsdruck umfasst.

5. Bremssystem (10, 60) umfassend:
einen Bremszylinder (14, 64) umfassend:
einen Kolben (32) mit einer ersten (34) und einer zweiten (36) sich gegenüberliegenden Seite;
ein Antriebsgehäuse (38) mit einer Innenfläche (40), welche eine Aussparung (42) definiert, welche den Kolben (32) in einem dichtenden und gleitenden Eingriff mit der Innenfläche (40) derart festhält, dass der Kolben (32) eine erste (44) und eine zweite (46) Kammer in der Aussparung (42) an der jeweiligen ersten (34) und zweiten (36) Seite des Kolbens (32) definiert, wobei das Antriebsgehäuse (38) eine mit der ersten Kammer (44) in Fluidverbindung stehende erste Öffnung (48) zur Aufnahme einer unter Druck stehenden ersten Flüssigkeit, eine mit der zweiten Kammer (46) in Fluidverbindung stehende zweite Öffnung (50) zur Aufnahme einer unter Druck stehenden zweiten Flüssigkeit, und eine mit der zweiten Kammer (46) in Verbindung stehende dritte Öffnung (52) aufweist; und
eine an den Kolben (32) an der zweiten Seite (36) des Kolbens (32) angekoppelte Stellstange (16, 66), welche sich in einem dichtenden und gleitenden Eingriff mit dem Antriebsgehäuse (38) durch die dritte Öffnung (52) erstreckt und an eine Bremse (12, 62) zur Betätigung der Bremse (12, 62) ankoppelbar ist; und
eine mit der ersten Öffnung (48) des Antriebsgehäuses (38) in Fluidverbindung stehende, unter Druck stehende erste Flüssigkeitsquelle zum Bewegen des Kolbens (32) und der Stellstange (16, 66) in eine Bremsbetätigungsrichtung (28, 76); und
eine mit der zweiten Öffnung (50) des Zylinderkörpers (38) in Fluidverbindung stehende, unter Druck stehende zweite Flüssigkeitsquelle, welche dazu ausgebildet ist, einen zweiten Flüssigkeitsdruck der zweiten Flüssigkeit gegen die zweite Seite (36) des Kolbens (32) zu steuern, um den Kolben (32) und die Stellstange (16, 66) in eine der Bremsbetätigungsrichtung (28, 76) entgegengesetzte Bremsfreigaberichtung (30, 84) gesteuert zu bewegen;
wobei die unter Druck stehende erste Druckquelle umfasst:
einen unter Druck stehenden Flüssigkeitsspeicher (24, 74), welcher mit der ersten Öffnung (48) des Antriebsgehäuses (38) in Fluidverbindung steht;
ein Rückschlagventil (22, 72), welches mit dem unter Druck stehenden Flüssigkeitsspeicher (24, 74) in Fluidverbindung steht, welches Rückschlagventil (22, 72) dazu ausgebildet ist, der ersten Flüssigkeit zu ermöglichen, durch dieses zu dem unter Druck stehenden Flüssigkeitsspeicher (24, 74) zugeführt zu werden, und dazu ausgebildet ist, die erste Flüssigkeit daran zu hindern, durch dieses aus dem unter Druck stehenden Flüssigkeitsspeicher (24, 74) auszutreten,
**dadurch gekennzeichnet, dass**
die unter Druck stehende erste Flüssigkeitsquelle während des Betriebs dazu ausgebildet ist, einen ersten Flüssigkeitsdruck der ersten Flüssigkeit gegen die erste Seite (34) des Kolbens (32) aufrechtzuerhalten,
und dadurch, das die unter Druck stehende erste Flüssigkeitsquelle ferner einen Druckregler (20, 70) umfasst, welcher mit dem Rückschlagventil (22, 72) in Fluidverbindung steht und dazu ausgebildet ist, der ersten Flüssigkeit zu ermöglichen, zu dem unter Druck stehenden Flüssigkeitsspeicher (24, 74) durch das Rückschlagventil (22, 72) zugeführt zu werden, bis die erste Flüssigkeit in dem unter Druck stehenden Flüssigkeitsspeicher (24, 74) den ersten Flüssigkeitsdruck erreicht.

6. System nach Anspruch 5, **dadurch gekennzeichnet, dass** die erste Flüssigkeit Gas enthält.

7. System nach Anspruch 5 oder 6, **gekennzeichnet durch** eine erste Flüssigkeitspumpe (18, 68) zum Zuführen der ersten Flüssigkeit zum Druckregler (20, 70).

8. System nach einem der Ansprüche 5 bis 7, **dadurch gekennzeichnet, dass** die unter Druck stehende zweite Flüssigkeitsquelle umfasst:
ein Rückschlagventil (82), welches mit der zweiten Öffnung (50) des Antriebsgehäuses (38) in Fluidverbindung steht; und
eine zweite Flüssigkeitspumpe (80) zum Zuführen der zweiten Flüssigkeit zum Regelventil (82) bei einem dritten Flüssigkeitsdruck, welcher höher als der erste Flüssigkeitsdruck ist.

9. System nach Anspruch 7, **dadurch gekennzeichnet, dass** die erste Flüssigkeitspumpe (18) mit dem Regelventil (26) in Fluidverbindung steht, um die zweite Flüssigkeit zum Regelventil (26) bei einem dritten Flüssigkeitsdruck zuzuführen, welcher höher als der erste Flüssigkeitsdruck ist.

10. Verfahren nach einem der Ansprüche 1 bis 4 oder System nach einem der Ansprüche 5 bis 9, **dadurch gekennzeichnet, dass** die zweite Flüssigkeit Gas enthält.

11. Verfahren nach einem der Ansprüche 1 bis 3 oder System nach einem der Ansprüche 5 bis 8, **dadurch gekennzeichnet, dass** die zweite Flüssigkeit Hydraulikflüssigkeit enthält.

## Revendications

1. Procédé de fonctionnement d'un actionneur de frein (14, 64) ayant un piston (32) pouvant être couplé à un frein (12, 62) pour actionner le frein (12, 62), le procédé comprenant:
l'application d'une première pression de fluide d'un premier fluide à l'encontre d'un premier côté (34) du piston (32) pour pousser le piston (32) dans une direction d'actionnement de frein (28, 76);
et
la commande d'une deuxième pression de fluide d'un deuxième fluide à l'encontre d'un deuxième côté (36) du piston (32) opposé au premier côté (34) du piston (32) pour déplacer le piston (32) de manière contrôlable dans une direction de libération de frein (30, 84) opposée à la direction d'actionnement de frein (28, 76); l'application de la première pression de fluide du premier fluide à l'encontre du premier côté (34) du piston (32) comprenant les étapes consistant à:
alimenter le premier fluide à travers un clapet anti-retour (22, 72) à un réservoir de fluide sous pression (24, 74) en communication de fluide avec une première chambre (44) située sur le premier côté (34) du piston (32); et
empêcher le premier fluide de s'échapper du premier réservoir de fluide sous pression (24, 74) à travers le clapet anti-retour (22, 72); et
**caractérisé par**
le maintien de la première pression de fluide du premier fluide à l'encontre du premier côté (34) du piston (32) lors du fonctionnement,
et par le fait que l'alimentation du premier fluide à travers le clapet anti-retour (22, 72) au réservoir de fluide sous pression (24, 74) comprend l'alimentation du premier fluide à travers le clapet anti-retour (22, 72) au réservoir de fluide sous pression (24, 74) à travers un régulateur de pression (20, 70) jusqu'à ce que le premier fluide dans le réservoir de fluide sous pression (24, 74) atteigne la première pression de fluide.

2. Procédé selon la revendication 1, dans lequel le premier fluide comprend un gaz.

3. Procédé selon la revendication 1 ou 2, dans lequel la commande de la deuxième pression de fluide du deuxième fluide à l'encontre du deuxième côté (36) du piston (32) comprend l'alimentation du deuxième fluide à une troisième pression de fluide supérieure à la première pression de fluide à une soupape de commande (26, 82) en communication de fluide avec une deuxième chambre (46) située sur le deuxième côté (36) du piston (32).

4. Procédé selon la revendication 3, dans lequel:
l'alimentation du premier fluide comprend l'alimentation du premier fluide venant d'une pompe de fluide (18); et
l'alimentation d'un deuxième fluide à la troisième pression de fluide à la soupape de commande (26) comprend l'alimentation du deuxième fluide à la troisième pression de fluide à la soupape de commande (26) à partir de la pompe de fluide (18).

5. Système de frein (10, 60) comprenant:
un actionneur de frein (14, 64) comprenant:
un piston (32) présentant des premier (34) et deuxième côtés (36) opposés;
un corps d'actionneur (38) ayant une surface intérieure (40) définissant une cavité (42) maintenant le piston (32) en prise étanche et coulissante avec la surface intérieure (40) si bien que le piston (32) définit des première (44) et deuxième (46) chambres dans la cavité (42) situées sur respectivement les premier (34) et deuxième (36) côtés du piston (32), le corps d'actionneur (38) ayant une première ouverture (48) en communication de fluide avec la première chambre (44) pour recevoir un premier fluide sous pression, une deuxième ouverture (50) en communication de fluide avec la deuxième chambre (46) pour recevoir un deuxième fluide sous pression, et une troisième ouverture (52) en communication avec la deuxième chambre (46); et
une tige d'actionneur (16, 66) couplée au piston (32) sur le deuxième côté (36) du piston (32), s'étendant en prise étanche et coulissante avec le corps d'actionneur (38) à travers la troisième ouverture (52), et pouvant être couplée à un frein (12, 62) pour actionner le frein (12, 62); et
une première source de fluide sous pression en communication de fluide avec la première ouverture (48) du corps d'actionneur (38) pour forcer le piston (32) et la tige d'actionneur (16, 66) dans une direction d'actionnement de frein (28, 76); et
une deuxième source de fluide sous pression en communication de fluide avec la deuxième ouverture (50) du corps d'actionneur (38) et configurée pour commander une deuxième pression de fluide du deuxième fluide à l'encontre du deuxième côté (36) du piston (32) pour déplacer le piston (32) et la tige d'actionneur (16, 66) de manière contrôlable dans une direction de libération de frein (30, 84) opposée à la direction d'actionnement de frein (28, 76);
la première source de fluide sous pression comprenant:
un réservoir de fluide sous pression (24, 74) en communication de fluide avec la première ouverture (48) du corps d'actionneur (38);
un clapet anti-retour (22, 72) en communication de fluide avec le réservoir de fluide sous pression (24, 74), le clapet anti-retour (22, 72) étant configuré pour permettre au premier fluide d'être amené à travers celui-ci au réservoir de fluide sous pression (24, 74) et configuré pour empêcher le premier fluide de s'échapper du réservoir de fluide sous pression (24, 74) à travers celui-ci,
**caractérisé en ce que**
la première source de fluide sous pression est configurée pour, lors du fonctionnement, maintenir une première pression de fluide du premier fluide à l'encontre du premier côté (34) du piston (32),
et **en ce que** la première source de fluide sous pression en outre comprend un régulateur de pression (20, 70) en communication de fluide avec le clapet anti-retour (22, 72) et configuré pour permettre au premier fluide d'être amené au réservoir de fluide sous pression (24, 74) à travers le clapet anti-retour (22, 72) jusqu'à ce que le premier fluide dans le réservoir de fluide sous pression (24, 74) atteigne la première pression de fluide.

6. Système selon la revendication 5, **caractérisé en ce que** le premier fluide comprend un gaz.

7. Système selon la revendication 5 ou 6, **caractérisé par** une première pompe de fluide (18, 68) pour alimenter le premier fluide au régulateur de pression (20, 70).

8. Système selon l'une quelconque des revendications 5 à 7, **caractérisé en ce que** la deuxième source de fluide sous pression comprend:
une soupape de commande (82) en communication de fluide avec la deuxième ouverture (50) du corps d'actionneur (38); et une deuxième pompe de fluide (80) pour alimenter le deuxième fluide à la soupape de commande (82) à une troisième pression de fluide supérieure à la première pression de fluide.

9. Système selon la revendication 7, **caractérisé en ce que** la première pompe de fluide (18) est en communication de fluide avec la soupape de commande (26) pour alimenter le deuxième fluide à la soupape de commande (26) à une troisième pression de fluide supérieure à la première pression de fluide.

10. Procédé selon l'une quelconque des revendications 1 à 4 ou le système selon l'une quelconque des revendications 5 à 9, **caractérisé en ce que** le deuxième fluide comprend un gaz.

11. Procédé selon l'une quelconque des revendications 1 à 3 ou le système selon l'une quelconque des revendications 5 à 8, **caractérisé en ce que** le deuxième fluide comprend un fluide hydraulique.
